# EUROPEAN PATENT APPLICATION

(11) **EP 1 605 644 A1**
(43) Date of publication of application: **14.12.2005**
(21) Application number: 04714924.0
(22) Date of filing: 26.02.2004
(51) Int. Cl.: H04L 12/56, H04L 29/02

(54) **PACKET TRANSFER CONTROL METHOD AND PACKET TRANSFER CONTROL CIRCUIT**

(30) Priority: 28.02.2003 JP 2003052258
(71) Applicant: MATSUSHITA ELECTRIC INDUSTRIAL CO., LTD., Kadoma-shi, Osaka 571-8501 (JP)
(72) Inventor: KANAZAWA, Takeshi, Kanagawa 240-0026 (JP)
(74) Representative: Leeming, John Gerard
(86) International application number: PCT/JP2004/002257
(87) International publication number: WO 2004/077767

(57) **Abstract**

Band control for every flow is made, and at the same time priority control is realized by a simple hardware configuration. A flow identification section 1 identifies the flow, to which each packet belongs. Flow identification information is notified to a flow setting information storage section 2. Based on such information, flow setting information is notified to a polishing section 3. In the polishing section, a rate measurement section 31 measures an arrival rate of the packet, and based on this arrival rate, a rate calculation section 32 calculates an arrival rate for the flow, to which the packet belongs. Then, a band comparative determination section 33 compares this arrival rate for the flow to information such as the minimum guaranteed band and the upper limit band previously set for this flow, and performs class setting for the flow for every packet. Flow identification information for each flow is stored in a schedule storage section 42 by class. A flow selection section 43 and a packet output section 44 selectively outputs the flow belonging to the high priority class.

## Description

### TECHNICAL FIELD

The present invention relates to a packet transfer control method and a packet transfer control circuit for controlling output order of packets when a plurality of provided packets are selectively output to the output line, and particularly to a packet transfer control method and a packet transfer control circuit according to band control method for performing band guarantee for each flow.

### BACKGROUND ART

In recent years, ADSL (Asymmetric Digital Subscriber Line) and FTTH (Fiber To The Home) have become popular. Therefore, always-on connections service in the consumer market has been popularized, and broadbandalization of access networks has become accelerated. Further, along with development of consumer electronics (home information appliances) corresponding to computerization and popularization of digital image delivery service, it is expected that differentiation demand for communication quality corresponding to various communication services would be increased.

Currently, in networks such as Internet, best effort service, which does not guarantee communication quality prevails. Along with increase of traffic and appearance of services to require different communication qualities, deterioration of communication quality for users has become a problem. Therefore, it is thinkable that in the future, realizing high quality QoS (Quality of Service) control in recognition of service types and band demand for every user flow would be important.

Further, in the future access network, it will be necessary that communication lines with high speed such as 100 Mbps to 1 Gbps at the maximum are massively accommodated in view of cost cutting of the communication system. Moreover, when many flows are dealt in the high-speed communication line as above, if QoS control is made by scheduling having a queue for every flow such as WRR (Weighted Round Robin), it becomes difficult to obtain scalability for both hardware quantity and scheduler process load.

Further, in the after-mentioned patent document 1, a band controller for making band control for every user flow by a simple hardware configuration and a method thereof are disclosed. In the technique disclosed in the patent document 1, first, a traffic flow rate for each flow is measured in a rate measurement section, the measured input rate is stored in the flow information storage section, meanwhile a queue length of a buffer for outputting receive packets of each flow to the output line is observed in a queue length monitoring section. Then, from the observed queue length and the minimum guaranteed band of each flow stored in the flow information storage section, an allowed rate for each flow is calculated in an allowed rate calculation section. Next, the measured input rate and the calculated allowed rate are compared in a disposition control section. When the input rate is equal to or less than the allowed rate, the packet of the flow is input to the buffer. Meanwhile, when the input rate outreaches the allowed rate, only the outreaching portion is disposed, and thereby control is made so that the input rate of each flow to the buffer can be always equal to or less than the allowed rate.

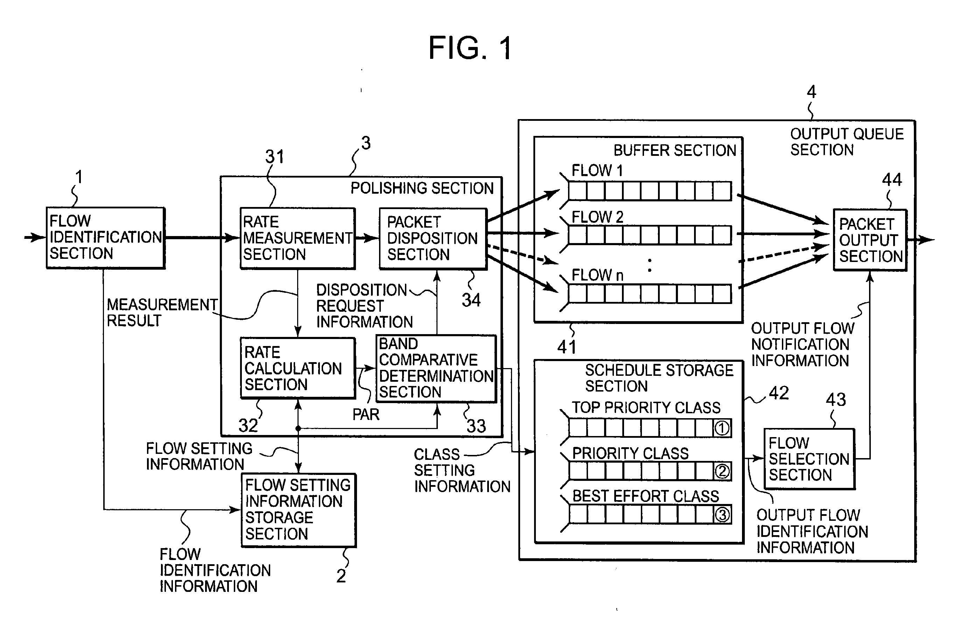

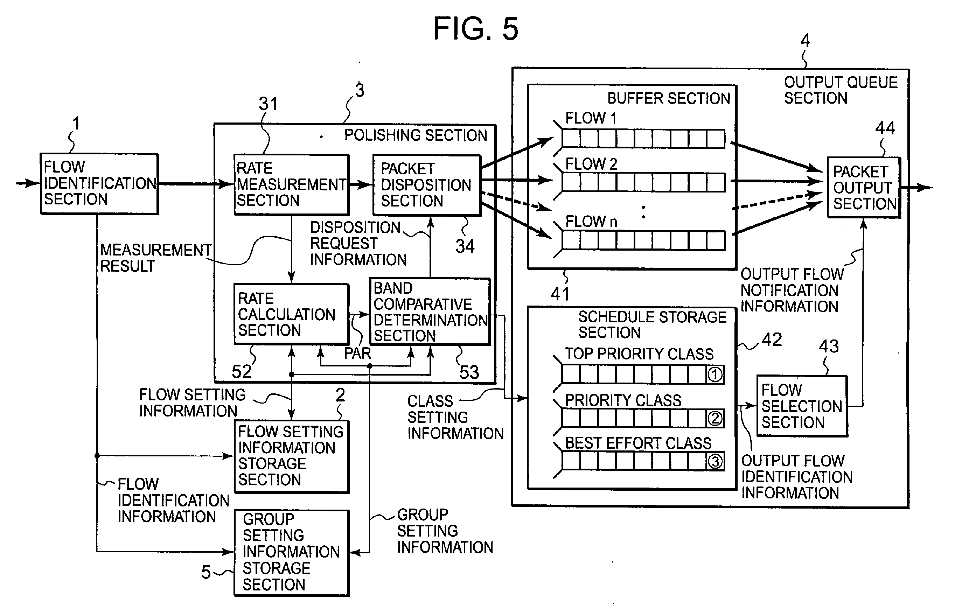

According to this technique, control and management are made so that a plurality of flows to be accommodated share one FIFO (First In First Out) buffer. Therefore, even if the number of flows is increased, small-sized hardware quantity is enough. Further, by monitoring the input rate for every flow and disposing the packet with the input rate equal to or more than the allowed rate, effects of the flow committing band violation (flow with the input rate, which overreaches the allowed rate) on other flows are prevented. As above, by using the technique disclosed in the patent document 1, band guarantee for a plurality of flows by a single queue becomes possible. Further, when excess band is generated, the allowed rate for each flow is increased in proportion to the minimum guaranteed band for each flow, and thereby the excess band can be allocated to flows according to the minimum guaranteed band for each flow. Patent document 1: Japanese Patent Laid-Open Publication No. 2002-185459 (paragraphs 0014 to 0021 and 0024, and FIGS 1 and 5)

The band controller disclosed in the patent document 1 makes band control by storing all flows in one queue. However, in each flow input to the band controller, various types of packets are mixed. For example, in each flow, packets of different applications are mixed. These packets include various types from a packet, which is relatively tolerant about delay or delay distortion such as E-mail and Web access, a packet requiring real time characteristics sensitive to delay or delay distortion such as audio communications and image delivery, to a packet, which is mission critical involved in backbone operations. As above, when all the flows, in which various types of packets are mixed are stored and controlled in one queue, performing QoS guarantee according to communication quality required for each of various types pf packets in each flow is not possible.

Further, the band controller disclosed in the patent document 1 allocates the excess band in proportion to the minimum guaranteed band of each flow. However, some users allow small minimum guaranteed band, but demands a large region of sending to the excess band, a so-called best effort. It is not possible to satisfy such a demand only by allocating the excess band in proportion to the minimum guaranteed band.

### DISCLOSURE OF THE INVENTION

In view of the foregoing problems, it is an object of the invention to provide a packet transfer control method and a packet transfer control circuit capable of performing band control for every flow and at the same time realizing priority control by a simple hardware configuration. Further, it is another object of the invention to provide a packet transfer control method and a packet transfer control circuit having high setting freedom capable of quantitatively setting the minimum guaranteed band and the upper limit band for each flow. Further, it is still another object of the invention to provide a packet transfer control method and a packet transfer control circuit capable of, for example, managing a plurality of flows belonging to the same link or the same VPN (Virtual Private Network) as one group to make band control and priority control for each group, in addition to band control and priority control for each flow.

In order to attain the foregoing objects, in the packet transfer control method of the invention, a flow, to which a provided packet belongs is identified; flow setting information for the identified flow is read out from previously set information; an arrival rate of the packet is measured; an arrival rate for the flow, to which the packet belongs is calculated based on the arrival rate of the packet; class setting of the flow, to which the packet belongs is performed in units of packet by comparing the arrival rate for the flow to the read flow setting information; and the output order of the plurality of packets is controlled based on the class of the class-set flow, to which the packet belongs.

Thereby, band control and priority control of packet output, in which class setting of each flow is performed according to the band that each flow uses, and packets belonging to each flow are output based on this set class can be realized by a simple hardware configuration.

Further, in the packet transfer control method according to the invention, in the step of performing class setting, when the arrival rate for the flow, to which the packet belongs is less than or equal to a value of the minimum guaranteed band information in the flow setting information, the class of the flow, to which the packet belongs is set to the reference priority class in the flow setting information; and when the arrival rate for the flow, to which the packet belongs is larger than the value of the minimum guaranteed band information and is less than or equal to a value of the upper limit band information in the flow setting information, the class of the flow, to which the packet belongs is set to the class lower than the reference priority class in the flow setting information.

Thereby, the class set when the arrival rate for the flow, to which the packet belongs reaches the minimum guaranteed band can be lower than the class set when the arrival rate for the flow, to which the packet belongs does not reach the minimum guaranteed band. Further, excess band can be allocated to a plurality of flows without affecting the flow, which does not reach the minimum guaranteed band.

Further, in the packet transfer control method of the invention, in the step of performing class setting, when the arrival rate for the flow, to which the packet belongs is larger than the value of the upper limit band information in the flow setting information, the class of the flow, to which the packet belongs is set to the class still lower than the class set when the arrival rate for the flow, to which the packet belongs is larger than the value of the minimum guaranteed band information and is less than or equal to the value of the upper limit band information in the flow setting information.

Thereby, the class set when the arrival rate for the flow, to which the packet belongs reaches the upper limit band can be lower than the class set when the arrival rate for the flow, to which the packet belongs does not reach the upper limit band, and other flows can be output by priority. The flow using up excess band is allowed to be output only when there are no other flows of upper priority classes.

Further, in the packet transfer control method of the invention, disposition process of the packet is performed when the arrival rate for the flow, to which the packet belongs is compared to the value of the upper limit band information in the flow setting information, and then the arrival rate for the flow, to which the packet belongs is larger than the value of the upper limit band information in the flow setting information.

Thereby, the packet belonging to the flow, which uses up excess band and outreaches the upper limit band can be disposed, and other flows can be output by priority.

Further, in the packet transfer control method of the invention, order management is performed so that the firstly arrived packet is output first in terms of a plurality of packets belonging to the same flow.

Thereby, management is enabled so that order of packets is maintained and packets are accurately processed at the destination thereof.

Further, in the packet transfer control method of the invention, in the step for controlling output order, flow identification information for identifying the flow is stored in a FIFO queue set correspondingly to each class based on the class of the class-set flow, to which the packet belongs, and the flow to be output next is specified by reading out the flow identification information from the FIFO queue of the high priority class.

Thereby, class setting can be performed by using the flow identification information for identifying each flow, and the packet belonging to the flow to be output next can be selected.

Further, in the packet transfer control method of the invention, group setting information for a group, to which the identified flow belongs is read out from previously set information; an arrival rate for the group, to which the flow belongs is calculated based on the arrival rate of the packet; disposition process of the packet is performed when the arrival rate for the group is compared to a value of the upper limit band information in the group setting information, and the arrival rate for the group of the flow is larger than the value of the upper limit band information in the group setting information.

Thereby, in addition to band control and priority control in units of flow, band control in units of group composed of a plurality of flows can be performed. For example, band control can be performed in units of the same link, the same VPN (Virtual Private Network) or the like, to which a plurality of flows belong.

Further, in order to attain the foregoing objects, the packet transfer control circuit of the invention includes a flow identification means for identifying a flow, to which a provided packet belongs; a flow setting information storage means for storing information previously set for each of a plurality of flows; a rate measurement means for measuring an arrival rate of the packet; a rate calculation means for calculating an arrival rate for the flow, to which the packet belongs based on the arrival rate of the packet; a class setting means for performing class setting of the flow, to which the packet belongs in units of packet by comparing the arrival rate for the flow to flow setting information for the flow read out from the flow setting information storage means after identification of the flow by the flow identification means; and an output control means for controlling the output order of the plurality of packets based on the class of the flow, to which the packet belongs set by the class setting means.

Thereby, band control and priority control of packet output, in which class setting for each flow is performed according to the band that each flow uses, and packets belonging to each flow are output based on this set class can be realized by a simple hardware configuration.

Further, in the packet transfer control circuit of the invention, when the arrival rate for the flow, to which the packet belongs is less than or equal to a value of the minimum guaranteed band information in the flow setting information, the class setting means sets the class of the flow, to which the packet belongs to the reference priority class in the flow setting information; and when the arrival rate for the flow, to which the packet belongs is larger than the value of the minimum guaranteed band information in the flow setting information and is less than or equal to a value of the upper limit band information, the class setting means sets the class of the flow, to which the packet belongs to the class lower than the reference priority class in the flow setting information.

Thereby, the class, in which the arrival rate for the flow, to which the packet belongs reaches the minimum guaranteed band can be set lower than the class, in which the arrival rate for the flow, to which the packet belongs does not reach the minimum guaranteed band. Further, excess band can be allocated to a plurality of flows without affecting the flow, which does not reach the minimum guaranteed band.

Further, in the packet transfer control circuit of the invention, when the arrival rate for the flow, to which the packet belongs is larger than the value of the upper limit band information in the flow setting information, the class setting means sets the class of the flow, to which the packet belongs to a class still lower than the class set when the arrival rate for the flow, to which the packet belongs is larger than the value of the minimum guaranteed band information and is less than or equal to the value of the upper limit band information in the flow setting information.

Thereby, the class set when the arrival rate for the flow, to which the packet belongs reaches the upper limit band can be lower than the class set when the arrival rate for the flow, to which the packet belongs does not reach the upper limit band. The flow using up excess band is allowed to be output only when there are no other flows of upper priority classes.

Further, in the packet transfer control circuit of the invention includes a packet disposition means for performing disposition process of the packet, when the arrival rate for the flow, to which the packet belongs is compared to the value of the upper limit band information in the flow setting information, and then the arrival rate for the flow, to which the packet belongs is larger than the value of the upper limit band information in the flow setting information.

Thereby, the packet belonging to the flow, which uses up excess band and outreaches the upper limit band can be disposed, and other flows can be output by priority.

Further, in the packet transfer control circuit of the invention, order management is performed so that the firstly arrived packet is output first in terms of a plurality of packets belonging to the same flow.

Thereby, management is enabled so that order of packets is maintained and packets are accurately processed at the destination thereof.

Further, in the packet transfer control circuit of the invention, the output control means has a plurality of FIFO queues set correspondingly to each class and a flow selection means for reading out the flow identification information from the FIFO queue of the high priority class in order to specify the flow to be output next. The flow identification information for identifying the flow is stored in one of the plurality of FIFO queues set correspondingly to each class based on the class of the class-set flow, to which the packet belongs, and the flow to be output next is specified by reading out the flow identification information stored in the FIFO queue of the high priority class by the flow selection means.

Thereby, class setting can be performed by using the flow identification information for identifying each flow, and the packet belonging to the flow to be output next can be selected.

Further, the packet transfer control circuit of the invention includes a group setting information storage means for storing information previously set for each of a plurality of groups, in which a plurality of flows are grouped; a group rate calculation means for calculating an arrival rate for the group, to which the flow belongs based on the arrival rate of the packet; and a packet disposition means for performing disposition process of the packet when the arrival rate for the group is compared to a value of the upper limit band information in the group setting information read out from the group setting information storage means after identification of the flow by the flow identification means, and the arrival rate for the group, to which the flow belongs is larger than the value of the upper limit band information in the group setting information.

Thereby, in addition to band control and priority control in units of flow, band control in units of group composed of a plurality of flows can be performed. For example, band control can be performed in units of the same link, the same VPN (Virtual Private Network) or the like, to which a plurality of flows belong.

### BRIEF DESCRIPTION OF THE DRAWINGS

FIG. 1 is a block diagram for showing a construction example of a packet transfer controller in a first embodiment of the invention;
FIG. 2 is a view showing a model of an example of flow setting information stored in a flow setting information storage section according to the invention;
FIG. 3 is a flowchart for explaining an example of operations in a polishing section according to the first embodiment of the invention;
FIG. 4 is a flowchart for explaining an example of operations in an output queue section according to the invention;
FIG. 5 is a block diagram showing a construction example of a packet transfer controller in a second embodiment of the invention;
FIG. 6 is a view showing a model of an example of flow/group correspondence information stored in a group setting information storage section according to the second embodiment of the invention;
FIG. 7 is a view showing a model of an example of group setting information stored in the group setting information storage section according to the second embodiment of the invention and;
FIG. 8 is a flowchart for explaining an example of operations in a polishing section according to the second embodiment of the invention.

### BEST MODE FOR CARRYING OUT THE INVENTION

Descriptions will be hereinafter given of embodiments of a packet transfer control method and a packet transfer control circuit of the invention with reference to the drawings.

### <First embodiment>

First, a first embodiment of the packet transfer control method and the packet transfer control circuit of the invention will be described. FIG. 1 is a block diagram showing a construction example of a packet transfer controller in the first embodiment of the invention. The packet transfer controller shown in FIG. 1 includes a flow identification section 1, a flow setting information storage section 2, a polishing section 3, and an output queue section 4. In FIG. 1, flow of packet is indicated by heavy lines, and flow of other information is indicated by thin lines.

The flow identification section 1 is provided with a packet sent from, for example, a communication terminal accommodated in a given communication network. The flow identification section 1 refers to header information of the provided packet (input packet), identifies the flow, to which the input packet belongs, and notifies information for the result of flow identification(flow identification information) to the flow setting information storage section 2. Types of flows to be identified can be voluntarily set according to needs, for example, classification by different applications, and classification by a sender address, a receiver address, or an intermediary address.

Further, the flow setting information storage section 2 stores information for each flow (flow setting information). The flow setting information storage section 2 sends flow setting information for the flow specified by the flow identification information notified by the flow identification section 1 to the polishing section 3.

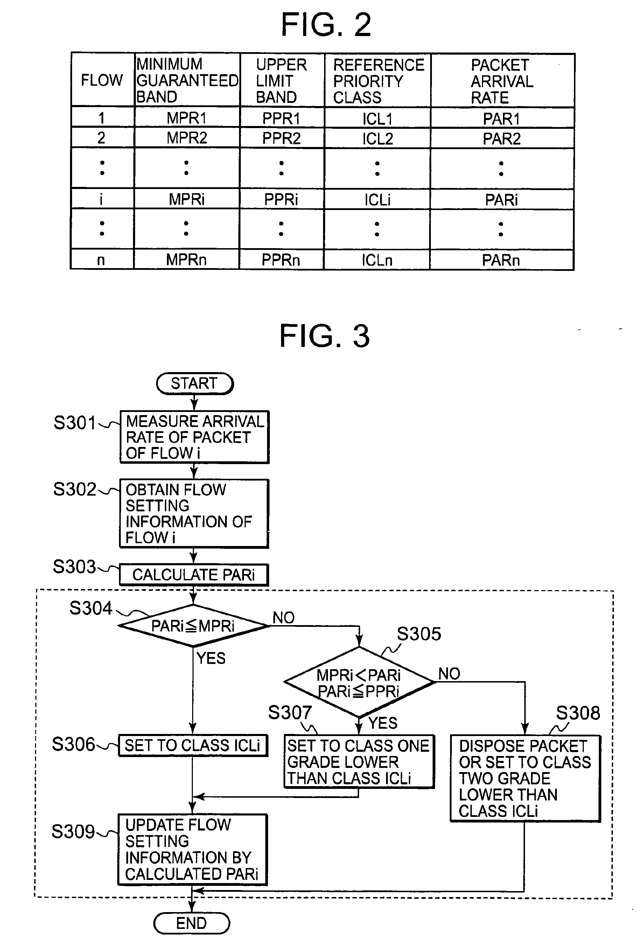

FIG. 2 is a view showing a model of an example of the flow setting information stored in the flow setting information storage section according to the invention. The flow setting information shown in FIG. 2 has minimum guaranteed band information (in some cases, hereinafter simply referred to as MPR: Minimum Packet Rate) MPR1 to MPRn; upper limit band information (in some cases, hereinafter simply referred to as PPR : Peak Packet Rate) PPR1 to PPRn; reference priority class information (in some cases, hereinafter simply referred to as ICL: Initial Class) ICL1 to ICLn, to which a flow belongs when each packet arrival rate of each flow is equal to or less than the minimum guaranteed band MPR information; and packet arrival rate information (in some cases, hereinafter simply referred to as PAR: Packet Arrival Rate) PAR1 to PARn of respective flows 1 to n (n is an integer number of 1 or more, and the number of flow types to be identified).

Of the flow setting information, regarding entries of the minimum guaranteed band information MPR, the upper limit band information PPR, and the reference priority class information ICL, the setting values for respective flows are previously stored. As described later, these entries are used for packet disposition process, packet class setting process and the like in the polishing section 3. An entry of the packet arrival rate information PAR, as described later, is used for packet disposition process, packet class setting process and the like in the polishing section 3. Regarding the entry of the packet arrival rate information PAR, the stored value is sequentially updated according to results of packet input monitoring by the polishing section 3.

The polishing section 3 receives notification of the flow setting information from the flow setting information storage section 2, is provided with the packet through the flow identification section 1, and performs packet disposition process, packet class setting process and the like. This polishing section 3 has a rate measurement section 31, a rate calculation section 32, a band comparative determination section (class setting section) 33, and a packet disposition section 34.

The rate measurement section 31 measures the arrival rate of the packet provided through the flow identification section 1. The rate calculation section 32 calculates the packet arrival rate information PAR for the flow, to which the packet targeted for measurement in the rate measurement section 31 belongs. The band comparative determination section 33 compares the packet arrival rate information PAR, which is calculated in the rate calculation section 32 to the minimum guaranteed band information MPR and the upper limit band information PPR in the notified flow setting information. According to the comparative result, the band comparative determination section 33 outputs disposition request information for instructing disposition of the packet or class setting information for instructing the class, to which the packet belongs. Further, the packet disposition section 34 performs packet disposition process when receiving the disposition request information from the band comparative determination section 33.

Next, descriptions will be given of operations of the polishing section 3 with reference to FIG. 3. FIG. 3 is a flowchart for describing an example of operations in the polishing section according to the first embodiment of the invention. For example, when a packet of a flow i arrives at the polishing section 3, the rate measurement section 31 measures the arrival rate of the packet (Step S301). The measured arrival rate of the packet is notified from the rate measurement section 31 to the rate calculation section 32.

Further, the rate calculation section 32 obtains the flow setting information for the flow i, to which the packet belongs from the flow setting information storage section 2 (Step S302). In this embodiment, the aspect that the flow setting information storage section 2 notifies the flow setting information identified by the flow identification information to the polishing section 3 is adopted. However, for example, it is possible to adopt an aspect that the flow identification information is notified from the flow identification section 1 to the polishing section 3, and then the polishing section 3 reads out the flow setting information identified by the flow identification information.

The rate calculation section 32 newly calculates a packet arrival rate information PARi of the flow i based on the measurement result of the rate measurement section 31 and the packet arrival rate information PARi in the flow setting information (Step S303). As a calculation method for the packet arrival rate information PARi, by way of example, a method that counting provided data amount of the packet belonging to the flow i is started at a given reference timing, provided data amounts of packets belonging to the same flow i are added, and thereby the data amount of the flow i provided to the polishing section 3 on and after the given reference timing is calculated, and at the next given reference timing, the count value is reset can be cited.

That is, by adding the measurement result of the rate measurement section 31 and the PARi in the flow setting information, it becomes possible to calculate the data amount of the flow i at intervals of a given reference timing. As described later (Step S309), the calculation result calculated in the rate calculation section 32 (PAR) is stored in the flow setting information, and referred in next calculation of the data amount of the flow i.

Next, the band comparative determination section 33 compares PARi calculated in the rate calculation section 32 to the minimum guaranteed band information MPRi and the upper limit band information PPRi in the flow setting information (Steps S304 and S305). For example, validation is made whether PARi belongs to the following (1) PARi≦MPRi, (2) MPRi<PARi≦PPRi, or (3) PARi<PPRi.

### (1) In the case of PARi≦MPRi (in the case of "YES" in Step S304)

The arrived packet is regarded as being within the minimum guaranteed band information MPRi set for the flow i (that is, the flow i has not reached the minimum guaranteed band yet). The packet is set to a class ICLi previously set for the flow i (Step S 306). Further, the band comparative determination section 33 outputs information showing that the packet is set to the class ICLi to the output queue section 4 as class setting information.

### (2) MPRi<PARi≦PPRi (in the case of "YES" in Step S305)

It is regarded that the arrived packet satisfies the minimum guaranteed band information MPRi set for the flow i, and uses excess band under the upper limit band information PPRi (that is, the flow i has reached the minimum guaranteed band, but has not reached the upper limit band yet). The packet is set to the class one grade lower than the class ICLi previously set for the flow i (Step S307). Further, the band comparative determination section 33 outputs information showing that the packet is set to the class one grade lower than the class ICLi to the output queue section 4 as class setting information.

### (3) PARi>PPRi (in the case of "NO" in Step S305)

Regarding the arrived packet, it is regarded that the upper limit band PPRi set for the flow i is outreached and all the allowed excess band is used up. The relevant packet is provided with disposition process (Step S308). In this case, the band comparative determination section 33 notifies disposition request information for requesting disposition process of the packet to the packet disposition section 34. The packet disposition section 34 receiving the disposition request information performs disposition process of the packet.

However, for the purpose of effective use of the output link band, it is possible to allow the packet to be output if there is still excess band even after the upper limit band is outreached. In this case, the packet is set to the class two grade lower than the class ICLi previously set for the flow i (Step S308). Further, the band comparative determination section 33 outputs information showing that the packet is set to the class two grade lower than the class ICLi to the output queue section 4 as class setting information.

Further, when the packet is determined as (1) PARi≦MPRi or (2) MPRi<PARi≦PPRi, the band comparative determination section 33 updates the packet rate information PARi in the flow setting information for the flow i stored in the flow setting information storage section 2 by new packet rate information PARi (PARi calculated in the rate calculation section 32) (Step S309). In this embodiment, when the excess band is used up as in (3) PARi>PPRi, the packet rate information PARi is not updated. However, even if determination is made as (3) PARi>PPRi, it is possible to update the packet rate information PARi.

As described above, in the polishing section 3, packet disposition process or class setting process is performed. When class setting process is performed, the packet and the class setting information for the packet are provided from the polishing section 3 to the output queue section 4. In the class setting information, at least flow identification information enabling identifying the flow for the packet and information showing the class set for the flow related to the packet are described.

Next, descriptions will be given of the output queue section 4. The output queue section 4 has a buffer section 41, a schedule storage section 42, a flow selection section 43, and a packet output section 44. The buffer section 41 actually stores packets, and controls output order of packets belonging to the same flow. That is, the buffer section 41 sets, for example, a FIFO (First In First Out) buffer for each flow so that a firstly arrived packet can be-output first in terms of the packets belonging to the same flow.

Further, the schedule storage section 42 manages output order of flows by class according to class setting information provided from the polishing section 3. Further, the flow selection section 43 refers to the output order of flows managed in the schedule storage section 42, selects the flow queued at the head of the highest class, and instructs the packet output section 44 to output the packet of the flow. Further, the packet output section 44 reads out from the buffer section 41 the packet queued at the head of the flow selected by the flow selection section 43, and outputs the packet to the external communication network.

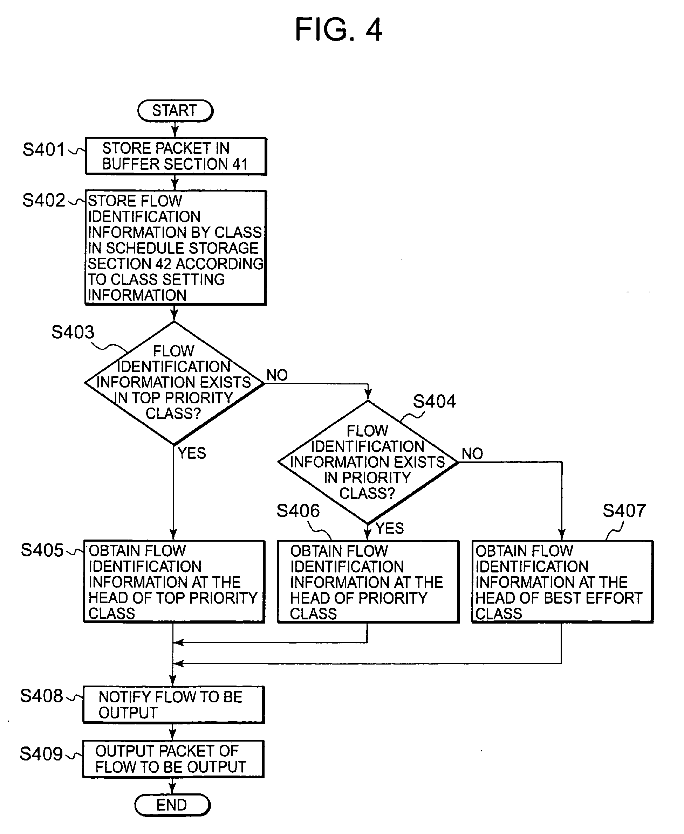

Next, descriptions will be given of operations of the output queue section 4 with reference to FIG. 4. FIG. 4 is a flowchart for describing an example of operations in the output queue section according to the invention. When a packet of the flow i is provided from the polishing section 3, the buffer section 41 stores the packet (Step S401). Then, arrival order and output order of packets are managed so that packet order is not reversed and a succeeding packet is not output first. For example, as shown in FIG. 1, a FIFO buffer is provided for each flow and a packet belonging to the same flow is stored at the rearmost position of the same FIFO buffer, and thereby it becomes possible to make management so that a firstly arrived packet is output first in terms of the same flow.

Further, class setting information is also provided from the polishing section 3 to the output queue section 4. When the class setting information for the flow i is provided, the schedule storage section 42 stores the flow identification information for identifying the flow i by class according to information showing the class in the class setting information (Step S402).

Specific descriptions will be hereinafter given of the process of the foregoing Step S402. For example, as shown in FIG. 1, when the number of classified classes is three classes of top priority class, priority class, and best effort class, in the class setting information provided from the polishing section 3, at least flow identification information for identifying the flow, to which a packet belongs, and the class set for that flow (one class of the foregoing top priority class, priority class, and best effort class) are described. Further, in the schedule storage section 42, FIFO buffers for respective classes (for example, when three classes exist, three FIFO buffers) are provided, and flow identification information belonging to the same class is stored at the rearmost position of the same FIFO buffer. Thereby, it becomes possible to make management so that firstly arrived flow identification information is output first in terms of the same class.

Next, the flow selection section 43 selects the flow to be output next with reference to the information stored in the schedule storage section 42. Specifically, when flow identification information exists in the FIFO buffer of the top priority class in the schedule storage section 42 (in the case of "YES" in Step S403), the flow selection section 43 selects the flow identification information at the head of the FIFO buffer of the top priority class (① of FIG. 1), and obtains the flow identification information as output flow identification information for identifying the flow to be output next (Step S405).

Further, when flow identification information does not exist in the FIFO buffer of the top priority class in the schedule storage section 42 (in the case of "NO" in Step S403), and flow identification information exists in the FIFO buffer of the priority class, the class one grade lower then the top priority class (in the case of "YES" in Step S404), the flow selection section 43 selects flow identification information at the head of the FIFO buffer of the priority class (② of FIG. 1), and obtains the flow identification information as output flow identification information for identifying the flow to be output next (Step S406).

Further, when flow identification information does not exist in the FIFO buffer of the priority class of the schedule storage section 42 (in the case of "NO" in Step S404), the flow selection section 43 selects flow identification information at the head of the FIFO buffer of the best effort class, the class one grade lower than the priority class (③ of FIG. 1), and obtains the flow identification information as output flow identification information for identifying the flow to be output next (Step S407). When flow identification information does not exist in the FIFO buffer of the best effort class either, determination is made that packets to be output do not exist, and no packet is output.

By one process of the foregoing Steps S405 to S407, the flow selection section 43, which has obtained the output flow identification information showing the flow to be output provides output flow notification information for requesting the packet output section 44 to output a packet from the flow to be output (Step S408). The packet output section 44 selects the packet existing at the head of the FIFO buffer of the flow to be output with reference to the output flow identification information, and outputs the packet to the external output line (Step S409).

In this embodiment, the method, in which the polishing section 3 compares the packet arrival rate per a given time to the band setting value is implemented. However, this method is not only way to go, but it is possible to use other method such as observing input quantity for every flow by performing polishing by using token bucket method.

As described above, according to the first embodiment of the invention, a flow, to which an input packet belongs is identified, class setting of the packet is performed with reference to band information for the flow and the like, the flow set to the highest class is sequentially selected, and the packets belonging to the flow are sequentially output. Thereby, band control, and at the same time, priority control, in which classification is performed in units of packet according to band information of each flow, and the flow belonging to the class of higher priority is selectively output in units of packet become possible.

### <Second embodiment>

Next, a second embodiment of the packet transfer control method and the packet transfer control circuit of the invention will be described. FIG. 5 is a block diagram showing a construction example of a packet transfer controller in the second embodiment of the invention. The packet transfer controller shown in FIG. 5 is a packet transfer controller, in which a band control function for every group is further added to the packet transfer controller shown in FIG. 1. Specifically, in the packet transfer controller shown in FIG. 5, a group setting information storage section 5 for storing information for each group (group setting information) is further provided. Further, in a rate calculation section 52 and a band comparative determination section 53, functions for performing processes about a packet arrival rate for every group (in some cases, hereinafter simply referred to as GPAR: Group Packet Arrival Rate) or upper limit band information for every group (in some cases, hereinafter simply referred to as GPPR: Group Peak Packet Rate) are added.

First, descriptions will be given of the group setting information storage section 5. The group setting information storage section 5 stores flow/group correspondence information showing to which group each flow belongs and information for each group (group setting information). When flow identification information is notified from the flow identification section 1, the group setting information storage section 5 specifies the group with reference to the flow/group correspondence information, and sends the group setting information for the group specified by the flow identification information to the polishing section 3.

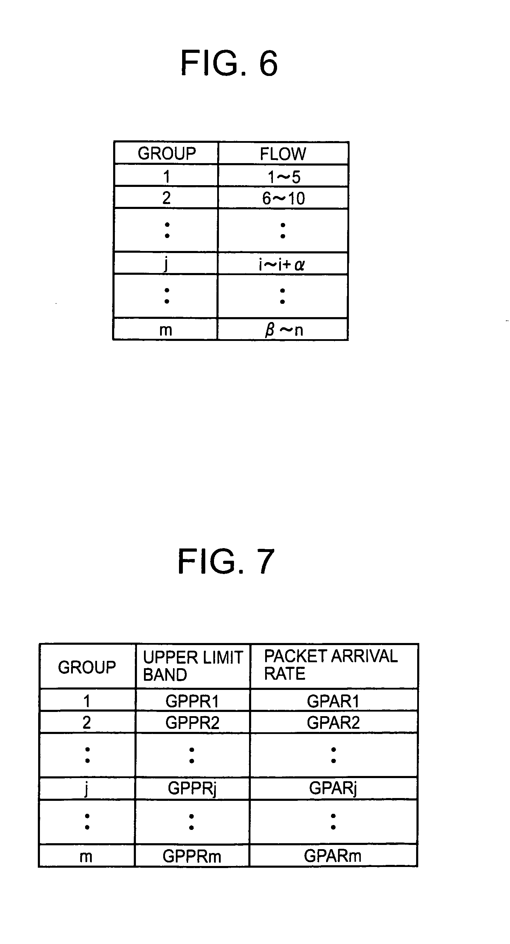

FIG. 6 is a view showing a model of an example of the flow/group correspondence information stored in the group setting information storage section according to the second embodiment of the invention. FIG. 7 is a view showing a model of an example of the group setting information stored in the group setting information storage section according to the second embodiment of the invention.

In the flow/group correspondence information shown in FIG. 6, correspondence relation between each group 1 to m (m is an integer number of 1 or more, and the number of types of groups to be identified) and each flow 1 to n (n is an integer number of 1 or more, and the number of types of flows to be identified) are described. For example, in the example shown in FIG. 6, it is found that flows 1 to 5 belong to group 1, and flows 6 to 10 belong to group 2. As in setting flows, types and the number of groups, correspondence between flows and groups and the like can be voluntarily set according to needs. For example, a plurality of flows belonging to the same link or the same VPN (Virtual Private Network) can be respectively grouped.

Further, the group setting information shown in FIG. 7 has upper limit band information GPPR1 to GPPRm of each group 1 to m and packet arrival rate information GPAR1 to GPARm of each group 1 to m. Of the group setting information, regarding an entry of the upper limit band information GPPR, a setting value is previously stored for each group; and regarding an entry of the packet arrival rate information GPAR, a stored value is sequentially updated according to results of input monitoring of the packet by the polishing section 3.

The group setting information storage section 5 receives the flow identification information from the flow identification section 1. Then, first, the group setting information storage section 5 refers to the foregoing flow/group correspondence information and determines the group, to which the input packet belongs. Further, the group setting information storage section 5 refers to the group setting information to obtain the group setting information set for the determined group, and notifies the group setting information of the group to the polishing section 3. In addition to the aspect that the group setting information storage section 5 notifies the group setting information of the group identified by the flow identification information to the polishing section 3, for example, it is possible to adopt an aspect that flow identification information is notified from the flow identification section 1 to the polishing section 3, and the polishing section 3 refers to flow/group correspondence information and group setting information to read out the group setting information for the desired group.

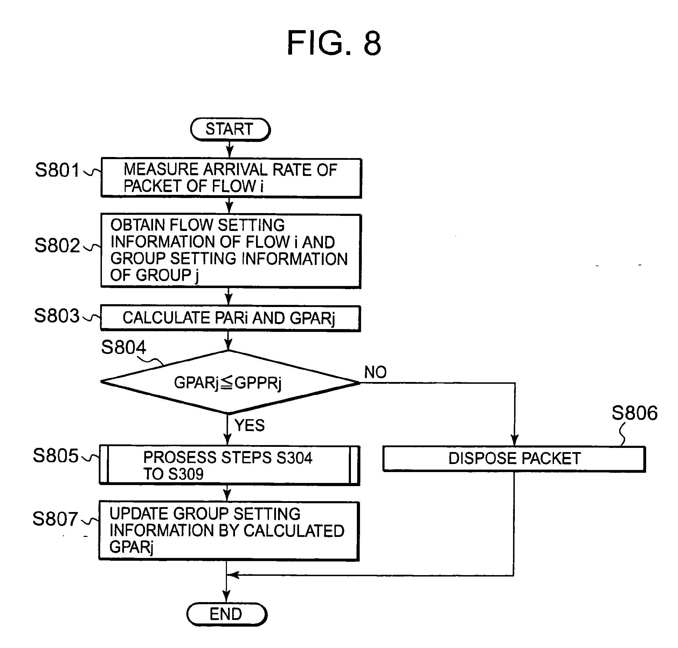

Next, descriptions will be given of operations of the polishing section 3 with reference to FIG. 8. FIG. 8 is a flowchart for describing an example of operations in the polishing section according to the second embodiment of the invention. For example, when a packet of a flow i arrives at-the polishing section 3, first, the rate measurement section 31 measures the arrival rate of the packet (Step S801). The measured arrival rate of the packet is notified from the rate measurement section 31 to the rate calculation section 52.

Further, the rate calculation section 52 obtains the flow setting information for the flow i, to which the packet belongs from the flow setting information storage section 2. Further, the rate calculation section 52 obtains the group setting information for a group j, to which the flow i of the packet belongs from the group setting information storage section 5 (Step S802). Here, the flow i shall belong to the group j.

The rate calculation section 52 newly calculates packet arrival rate information PARi of the flow i based on the measurement result of the rate measurement section 31 and the packet arrival rate information PARi in the flow setting information. Further, the rate calculation section 52 newly calculates packet arrival rate information GPARj of the group j based on the measurement result of the rate measurement section 31 and the packet arrival rate information GPARj in the group setting information (Step S803). As a calculation method for the packet arrival rate information GPARj, the same method as the above-mentioned calculation method for the packet arrival rate PARi can be used.

Next, the band comparative determination section 53 compares the GPARj calculated in the rate calculation section 52 to the upper limit band information GPPRj in the group setting information (Step S804). For example, validation is made whether GPARj belongs to the following (1) GPARj≦GPPRj or (2) GPARj<GPPRj.

### (1) GPARj≦GPPRj (in the case of "YES" in Step S804)

It is regarded that the arrived packet has not reached the upper limit band information GPPRj set for the group j and is within the upper limit band set for the whole group j. That is, the packet does not violate the band set for the whole group j, and is allowed in view of the band set for the whole group j. For this packet, processes based on the flow setting information (Step S805: processes of Steps S304 to S309 in the portion surrounded by a dotted line in FIG. 3) are performed. Further, the band comparative determination section 53 uploads the packet rate information GPARj in the group setting information of the group j stored in the group setting information storage section 5 by a new packet rate information GPARj (GPARj calculated in the rate calculation section 52) (S807).

### (2) GPARj>GPPRj (in the case of "NO" in Step S804)

Regarding the arrived packet, it is regarded that the upper limit band GPPRj previously set for the group j is outreached, and all the allowed excess band is used up. That packet is provided with disposition process (Step S806). In this case, the band comparative determination section 53 notifies disposition request information for requesting disposition process of the packet to the packet disposition section 34. The packet disposition section 34 receiving the disposition request information performs disposition process of the packet. As in the first embodiment, for the purpose of effective use of band of the output link, it is possible to allow the packet to be output if there is still excess band even after the upper limit band is outreached.

Except for the case that the foregoing process is performed in the polishing section 3 and disposition process of the packet is performed, the packet and the class setting information of the packet are provided from the polishing section 3 to the output queue section 4. The output queue section 4 receives such information and performs the same process as in the first embodiment. Thereby, the packet is selectively output.

In this embodiment, a plurality of flows are grouped to set a bunch of groups. Further, it is possible to group a plurality of groups belonging to the bunch of groups, construct groups in a hierarchical fashion, and perform band control process. Further, it is possible to group a plurality of flows by different aspects (different classification methods) to set a plurality of bunches of groups, and perform band control process in parallel in each bunch of groups.

As described above, according to the second embodiment of the invention, by setting flows and groups and identifying the flow and the group, to which the input packet belongs, it becomes possible to simultaneously perform band control for each group set for each flow, in addition to band control and priority control for every flow.

In the first and the second embodiments, flows are classified in three classes, top priority class, priority class, and best effort class. However, it is possible to change the number of classes depending on the assumed system, and possible to voluntarily set the number of classes without departing from the characteristics and the object of the invention. Further, types of flows or groups, the numbers of flows or groups can be voluntarily set according to needs.

Further, when packets of the flow determined as top priority class are continuously input, output of packets belonging to the flow of relatively lower classes may be delayed. Therefore, for example, it is preferable that values in the flow setting information and the group setting information are set and the network is constructed so that the total of band guarantee of top-priority class is smaller than a band of output link.

### INDUSTRIAL APPLICABILITY

As described above, according to the invention, the flow, to which a provided packet belongs is identified, flow setting information for the identified flow is read out from previously set information, an arrival rate of the packet is measured, and an arrival rate for the flow, to which the packet belongs is calculated based on the arrival rate of the packet, class setting of the flow, to which the packet belongs is performed in units of packet by comparing the arrival rate for the flow to the read flow setting information, and output order of a plurality of packets is controlled based on the class of the class-set flow, to which the packet belongs. Therefore, band control and priority control of packet output, in which class setting for each flow is performed according to the band that each flow uses, and packets belonging to each flow are output based on this set class can be realized by a simple hardware configuration.

## Claims

1. A packet transfer control method for controlling output order when a plurality of packets to be provided are selectively output to an output line comprising the steps of:
identifying a flow, to which a provided packet belongs;
reading out flow setting information for the identified flow from previously set information;
measuring an arrival rate of the packet;
calculating an arrival rate for the flow, to which the packet belongs based on the arrival rate of the packet;
performing class setting of the flow, to which the packet belongs in units of packet by comparing the arrival rate for the flow to the read flow setting information; and
controlling the output order of the plurality of packets based on the class of the class-set flow, to which the packet belongs.

2. The packet transfer control method according to claim 1, wherein in the step of performing class setting, when the arrival rate for the flow, to which the packet belongs is less than or equal to a value of the minimum guaranteed band information in the flow setting information, the class of the flow, to which the packet belongs is set to the reference priority class in the flow setting information; and when the arrival rate for the flow, to which the packet belongs is larger than the value of the minimum guaranteed band information and is less than or equal to a value of the upper limit band information in the flow setting information, the class of the flow, to which the packet belongs is set to the class lower than the reference priority class in the flow setting information.

3. The packet transfer control method according to claim 2, wherein in the step of performing class setting, when the arrival rate for the flow, to which the packet belongs is larger than the value of the upper limit band information in the flow setting information, the class of the flow, to which the packet belongs is set to the class still lower than the class set when the arrival rate for the flow, to which the packet belongs is larger than the value of the minimum guaranteed band information and is less than or equal to the value of the upper limit band information in the flow setting information.

4. The packet transfer control method according to claim 1 or 2 comprising the step of:
performing disposition process of the packet, when the arrival rate for the flow, to which the packet belongs is compared to the value of the upper limit band information in the flow setting information, and then the arrival rate for the flow, to which the packet belongs is larger than the value of the upper limit band information in the flow setting information.

5. The packet transfer control method according to claim 1 or 2 comprising the step of:
performing order management so that the firstly arrived packet is output first in terms of a plurality of packets belonging to the same flow.

6. The packet transfer control method according to claim 1 or 2, wherein in the step for controlling output order, flow identification information for identifying the flow is stored in a FIFO queue set correspondingly to each class based on the class of the class-set flow, to which the packet belongs, and the flow to be output next is specified by reading out the flow identification information from the FIFO queue of the high priority class.

7. The packet transfer control method according to claim 1 or 2 comprising the steps of:
reading out group setting information for a group, to which the identified flow belongs from previously set information;
calculating an arrival rate for the group, to which the flow belongs based on the arrival rate of the packet;
performing disposition process of the packet when the arrival rate for the group is compared to a value of the upper limit band information in the group setting information, and the arrival rate for the group of the flow is larger than the value of the upper limit band information in the group setting information.

8. A packet transfer control circuit for controlling output order when a plurality of packets to be provided are selectively output to an output line comprising:
a flow identification means for identifying a flow, to which a provided packet belongs;
a flow setting information storage means for storing information previously set for each of a plurality of flows;
a rate measurement means for measuring an arrival rate of the packet;
a rate calculation means for calculating an arrival rate for the flow, to which the packet belongs based on the arrival rate of the packet;
a class setting means for performing class setting of the flow, to which the packet belongs in units of packet by comparing the arrival rate for the flow to flow setting information for the flow read out from the flow setting information storage means after identification of the flow by the flow identification means; and
an output control means for controlling the output order of the plurality of packets based on the class of the flow, to which the packet belongs set by the class setting means.

9. The packet transfer control circuit according to claim 8, wherein when the arrival rate for the flow, to which the packet belongs is less than or equal to a value of the minimum guaranteed band information in the flow setting information, the class setting means sets the class of the flow, to which the packet belongs to the reference priority class in the flow setting information; and when the arrival rate for the flow, to which the packet belongs is larger than the value of the minimum guaranteed band information in the flow setting information and is less than or equal to a value of the upper limit band information, the class setting means sets the class of the flow, to which the packet belongs to the class lower than the reference priority class in the flow setting information.

10. The packet transfer control circuit according to claim 9, wherein when the arrival rate for the flow, to which the packet belongs is larger than the value of the upper limit band information in the flow setting information, the class setting means sets the class of the flow, to which the packet belongs to a class still lower than the class set when the arrival rate for the flow, to which the packet belongs is larger than the value of the minimum guaranteed band information and is less than or equal to the value of the upper limit band information in the flow setting information.

11. The packet transfer control circuit according to claim 8 or 9 comprising:
a packet disposition means for performing disposition process of the packet, when the arrival rate for the flow, to which the packet belongs is compared to the value of the upper limit band information in the flow setting information, and then the arrival rate for the flow, to which the packet belongs is larger than the value of the upper limit band information in the flow setting information.

12. The packet transfer control circuit according to claim 8 or 9 comprising:
a packet order management means for performing order management so that the firstly arrived packet is output first in terms of a plurality of packets belonging to the same flow.

13. The packet transfer control circuit according to claim 8 or 9, wherein the output control means comprises a plurality of FIFO queues set correspondingly to each class and a flow selection means for reading out the flow identification information from the FIFO queue of the high priority class in order to specify the flow to be output next, and wherein
the flow identification information for identifying the flow is stored in one of the plurality of FIFO queues set correspondingly to each class based on the class of the class-set flow, to which the packet belongs, and the flow to be output next is specified by reading out the flow identification information stored in the FIFO queue of the high priority class by the flow selection means.

14. The packet transfer control circuit according to claim 8 or 9 comprising:
a group setting information storage means for storing information previously set for each of a plurality of groups, in which a plurality of flows are grouped;
a group rate calculation means for calculating an arrival rate for the group, to which the flow belongs based on the arrival rate of the packet and;
a packet disposition means for performing disposition process of the packet when the arrival rate for the group is compared to a value of the upper limit band information in the group setting information read out from the group setting information storage means after identification of the flow by the flow identification means, and the arrival rate for the group, to which the flow belongs is larger than the value of the upper limit band information in the group setting information.
